# EUROPÄISCHE PATENTANMELDUNG

(11) **EP 1 072 880 A1**
(43) Veröffentlichungstag der Anmeldung: **31.01.2001**
(21) Anmeldenummer: 99810546.4
(22) Anmeldetag: 21.06.1999
(51) Int. Cl.: G01N 15/08

(54) **Verfahren und Vorrichtung zur Messung der Wasserdampfdurchlässigkeit durch eine Folie oder Membran**

(71) Anmelder: Lyssy, Georges H., Dr., CH-8702 Zollikon (CH)
(72) Erfinder: Lyssy, Georges H., Dr., CH-8702 Zollikon (CH)
(74) Vertreter: Patentanwaltsbüro Feldmann AG

(57) **Zusammenfassung**

In einer bisher ublichen Messkammer bestehend aus Messkammerunterteil (2) und Messkammeroberteil (3) wird neu im Aufnahmeraum (4) des Messkammerunterteiles (2) ein Schwamm mit kapillarer Wirkung untergebracht, auf den mindestens am Uebergangsbereich von Schwamm zur zu messenden Folie oder Membran eine atmungsaktive Deckfolie (23) angebracht wird, welche vom Schwamm (24) unter Druck von unten anliegt. Hiermit wird die wasserdampfgesättigte Atmosphäre bis praktisch direkt an die zu messende Folie oder Membran (20) angelegt.

## Beschreibung

Die vorliegende Erfindung betrifft ein Verfahren sowie eine dazu geeignete Vorrichtung zur Messung von Wasserdampfdurchlässigkeit durch eine Folie oder Membran, wobei die zu messende Folie oder Membran in einer Messkammer gehalten ist und die Trennfläche zwischen einem Messkammerunterteil und einem Messkammeroberteil darstellt, wobei im Messkammerunterteil Wasser vorhanden ist und im Messkammeroberteil ein trockenes Trägergas durchströmt zum Abtransport des durchgetretenen Wasserdampfes.

Verfahren und Vorrichtungen zur Messung der Gasdurchlassigkeit von Folien oder Hohlkörpern sind seit rund dreissig Jahren bekannt und auf dem Markt angeboten. Ein typisches Beispiel einer solchen Messeinrichtung und des entsprechenden Verfahrens geht beispielsweise aus der CH-A-551'005 hervor. Aber bereits fruher waren Messeinrichtungen zur Bestimmung der Gasdurchlässigkeit bekannt, wie aus entsprechenden Normblattern hervorgeht. Hierzu wird beispielsweise auf die DIN-Norm 53380 vom Juni 1969 oder auf die ISO/DIN 2556 hingewiesen. Bei diesen Verfahren wird eine Seite einer zu prüfenden Folie einem Probegas unter atmospharischem oder geringem Ueberdruck ausgesetzt, währenddem auf der anderen Seite während der Messung Unterdruck herrscht, beziehungsweise zwischen den Messungen erzeugt wird, welcher je nach der Durchlässigkeit der Folie mehr oder weniger schnell aufgefüllt wird, wobei der Druckanstieg in Funktion der Zeit ein Massstab fur die Durchlässigkeit der Folie ist.

Geräte zur Messung der Wasserdampfabgabe einer Materie, bzw. zur Messung der Wasserdampfpermeabilitat von Folien oder Membranen, die einen apparativen Aufbau aufweisen, entsprechend dem Oberbegriff des Patentanspruches 3, beziehungsweise nach dem Verfahren arbeiten gemäss dem Anspruch 1, sind beispielsweise aus den Schutzrechten DE-A-38'19'335, EP-A-0'408'488 und ferner aus der CH-A-0'684'503 bekannt.

Bei diesen Verfahren bzw. bei den bekannten Vorrichtungen hat man Wasser direkt in die untere Messkammer eingebracht, in einer Schale in die Messkammer gestellt. Da wahrend der Messung gelegentlich die Messkammer umgestellt werden muss oder Erschutterungen auftreten mögen, hat man gelegentlich auch einen Schwamm untergebracht, wobei der Schwamm vor allem dazu diente, eine freie Wasserflache zu meiden, die durch entsprechende Bewegungen verschuttet werden konnte.
Die bekannten Messverfahren und die entsprechenden Vorrichtungen haben sich seit vielen Jahren bewahrt und die Resultate ergeben Relativwerte, die bei den meisten Anwendungsfallen mit hoher Genauigkeit wiederholbar und folglich auch repräsentativ sind. Erst seit neuerer Zeit sind Folien und Membranen auf dem Markt erhältlich, die eine extrem hohe Wasserdampfdurchlässigkeit aufweisen. Bei Messungen solcher Folien beziehungsweise Membranen traten in den Messresultaten Schwankungen auf, die in feststellbaren Grössenordnungen liegen. Durch theoretische Ueberlegungen ist man zu folgenden Schlüssen gelangt, welche die Messungenauigkeiten erklären. Bekanntlich herrscht Wasserdampfsättigung praktisch lediglich in einer begrenzten Schicht direkt oberhalb einer Flüssigkeit. Die relative Luftfeuchtigkeit nimmt im Abstand von der freien Wasserflache bis zur Folie hin ab. Zwischen dem gesättigten Bereich und dem Bereich mit niedriger relativer Luftfeuchtigkeit bildet sich eine ruhende Luftschicht, welche praktisch eine isolierende Schicht darstellt. In der Messkammer wird somit die durch die Folie hindurch permeabilitierte Feuchtigkeit dank der ruhenden Luftmassen nur langsam wieder ersetzt, so dass im Prinzip das Messresultat durch die Distanz vom Bereich mit wasserdampfgesattigter Luft bis zur zu messenden Folie beziehungsweise Membran in die Messung einfliesst.

Die heute wirtschaftlich sehr interessanten Folien und Membranen aus atmungsaktiven Materialien haben die Eigenschaft, eine kapillare Wirkung in Bezug auf Gase zu haben. Tritt somit Wasserdampf auf der einen Seite der Folie auf, so wird durch Randeffekte der Wasserdampf durch die Folie oder Membran hindurch transportiert. Dies ergibt extrem hohe Werte der Wasserdampfpermeabilität solcher Materialien. Eine der bekanntesten Materialien dieser Art wird unter dem Warenzeichen Goretex® angeboten. Diese Wasserdampfdurchlassigkeit ist kennzeichnendes Merkmal solcher sogenannter atmungsaktiver Folien. Es ist die Aufgabe der vorliegenden Erfindung, ein Verfahren zu schaffen, mittels dem atmungsaktive Folien oder Membranen mit erhöhter Genauigkeit gemessen werden können.

Die bisherigen Messapparaturen sind üblicherweise nicht fur derart hohe Konzentrationen an Wasserdampfdurchlassigkeit geeignet. Durch die Massnahme gemäss Anspruch 2 kann das Verfahren mit den bisher üblichen Apparaten durchgefuhrt werden unter Beibehaltung der extrem hohen Messgenauigkeit.

Es war ferner die Aufgabe der vorliegenden Erfindung, eine Vorrichtung der bekannten Art mit möglichst geringem Aufwand für die Messung von atmungsaktiven Folien und Membranen bezuglich deren Wasserdampfpermeabilität geeignet zu machen.

Diese Aufgabe lost eine Vorrichtung mit dem Merkmalen des Patentanspruches 3.

Weitere vorteilhafte Ausgestaltungsformen der erfindungsgemässen Vorrichtung gehen aus den weiteren abhangigen Ansprüchen hervor.

In der Zeichnung ist das physikalische Problem dargestellt und schematisch die erfindungsgemässe Vorrichtung, mit welcher das erfindungsgemässe Verfahren durchfuhrbar ist, gezeigt. Es zeigt:
- Figur 1: die schematische Darstellung der Wasserdampfpermeabilitätsmessung in physikalischer Erläuterung und
- Figur 2: die erfindungsgemässe schematische Darstellung einer entsprechend ausgerüsteten Messkammer gemass der Erfindung in einem Vertikalschnitt.
- Figur 3: zeigt den Lagenaufbau im Bereich der Membran an der Stelle III gemass Figur 2.

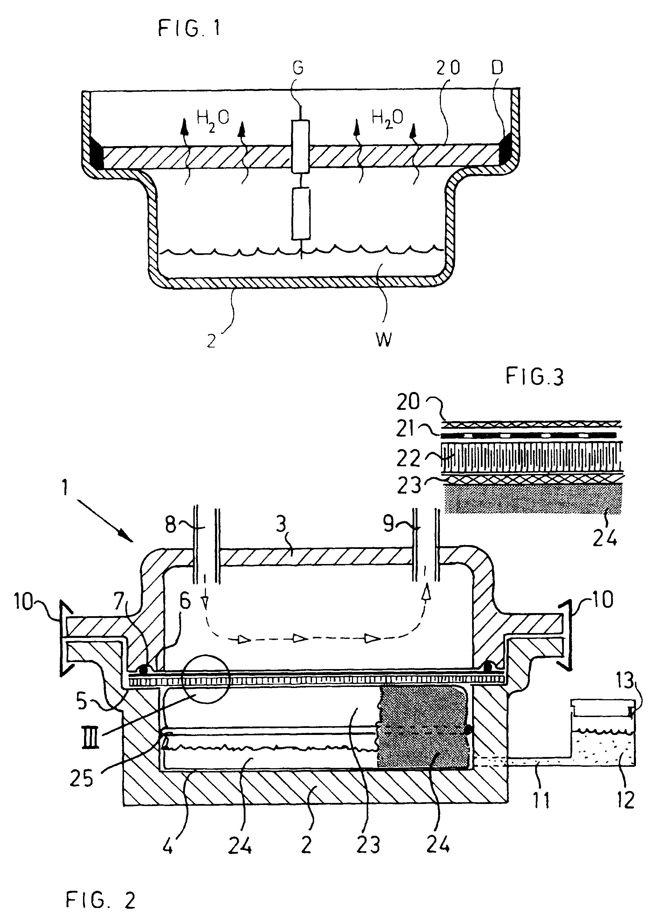

In der Figur 1 ist schematisch ein Messkammerunterteil 2 im Schnitt dargestellt. Bei verschiedenen heute angewendeten Methoden bildet der Messkammerunterteil 2 selber eine Wasserkammer, in der das Wasser frei vorhanden ist. Dieses Wasser verdunstet, steigt auf und permeiert durch die zu messende Testfolie oder Membran 20. Gemessen wird die durchtretende Wasserdampfmenge durch die zu messende Folie oder Membran innerhalb 24 Stunden pro Oberflacheneinheit.
Auch die Luft selber stellt einen Widerstand zur Wasserdampfdurchlassigkeit dar. Dieser Widerstand ist in der Skizze mit R_{L} dargestellt. Die eigentliche Wasserdampfdurchlassigkeit der Folie ist dann der Widerstand R_{F}. Gemessen wird mit allen heute üblichen Messgeräten die Grosse G, welche sich zusammensetzt aus R_{L} + R_{F}. Betrachtet man hierin die zu messende Folie oder Membran 20 als feste Grösse, so wird das Resultat der Messung im Prinzip nur von der Variation der Wasserdampfdurchlässigkeit der Luftschicht zwischen der Wasseroberfläche W und der unteren Oberfläche der zu testenden Membran oder Folie sein. Diese Grösse ist nur noch distanzabhangig. Bisher hat man dies vernachlässigt, da ohne grosseren Aufwand die Wasseroberfläche in der Messkammer problemlos auf einem gewissen Niveau gehalten werden kann. Auf Grund dieser Erkenntnisse sind gewisse Anbieter von Messvorrichtungen zur Ermittlung der Wasserdampfdurchlassigkeit dazu übergegangen, Vorrichtungen anzubieten, bei denen der Luftspalt zwischen Wasseroberfläche und Testmembran in der Auswertung mit berücksichtigt wird. Dies ist aber trotzdem noch problematisch, da bei den heute auf dem Markt erhältlichen atmungsaktiven Membranen die Wasserdampfdurchlassigkeit so hoch ist, dass der eigentliche Wasserdampftransport von der Oberfläche zur Testmembran zum eigentlichen Problem wird. Rechnerisch lässt sich dieses mit vernunftigen Modelluberlegungen nicht berechnen. Die Erfindung hat folglich die Problemstellung anders angefasst und statt rechnerischer Kompensation eine Lösung gefunden, bei der der Wasserdampftransport weitgehend behoben werden konnte.

Die erfindungsgemasse Losung ist aus der Figur 2 ersichtlich. Hier ist eine bisher gebrauchliche Messkammer in einem Vertikalschnitt dargestellt. Die Messkammer 1 besteht aus dem Messkammerunterteil 2 und dem form- und kraftschlussig darauf zu haltenden Messkammeroberteil 3. Der Messkammerunterteil 2 hat wie ublich den Aufnahmeraum 4. In diesem befand sich bisher üblich das Wasserbad zur Erzeugung einer wasserdampfgesattigten Zone. Der Messkammerunterteil weist ferner einen im oberen Bereich angeordneten umlaufenden Auflagerand 5 auf, auf dem eine zu messende Folie oder Membran aufliegt. Entsprechend hat der Messkammeroberteil 3 einen Dichtrand 6, so dass zwischen dem Auflagerand 5 und dem. Dichtrand 6 eine zu testende Folie oder Membran dichtend und klemmend gehalten werden kann. Hierzu ist insbesondere auch im Dichtrand 6 des Messkammeroberteiles 3 eine halbrunde umlaufende Ringnut vorgesehen, in der ein Dichtring 7 eingelegt ist. Sind die Schliessklammern 10 angelegt, so sind Messkammeroberteil und Messkammerunterteil form- und kraftschlüssig miteinander verbunden und die zu messende Folie beziehungsweise Membran dazwischen dichtend gespannt gehalten. Der durch die Testmembran beziehungsweise Testfolie permeierende Wasserdampf gelangt in den Messkammeroberteil 3, wo er mittels einem Tragergas abtransportiert wird. Hierzu ist im Messkammeroberteil 3 ein Trägergaseingang 8 sowie ein Tragergasausgang 9 vorhanden. Die Feuchtigkeit lasst sich dann mittels bekannter Mittel vom Tragergas trennen und entsprechend messen. Dies entspricht den herkommlichen Methoden der Wasserdampfdurchlässigkeitsmessung.

Neu ist hingegen die Anordnung im Messkammerunterteil 2. Hier wird ein Schwamm angeordnet, dessen Oberfläche mindestens gleich gross ist wie die vorgeschriebene Messflache und dessen Höhe geringfugig grösser ist- als die Höhe des Aufnahmeraumes 4. Während der Messung liegt somit der im Aufnahmeraum 4 untergebrachte Schwamm 24 geringfugig unter Druck an. Hierbei liegt jedoch der Schwamm 24 nicht direkt an der zu messenden Folie oder Membran an, sondern der Schwamm 24 selber ist von einer atmungsaktiven Deckfolie 23 uberzogen. Lagestabil auf dem Schwamm gehalten ist diese atmungsaktive Deckfolie 23 mittels eines O-Ringes 25, der wiederum so bemessen sein kann, dass er dichtend an der vertikalen Innenwand des Messkammerunterteiles 2 anliegt. Die atmungsaktive Deckfolie 23 liegt nun entweder direkt an der zu messenden Folie oder Membran 20 an oder, falls dies erforderlich ist, kann ein entsprechender Trager 22 vorhanden sein. Auch wenn der Trager 22 nicht vorhanden ist, kann zwischen der atmungsaktiven Deckfolie 23 auf dem Schwamm 24 und der zu messenden Folie oder Membran 20 noch eine genormte Lochfolie aus Aluminium dazwischen angeordnet sein. Diese genormte Lochfolie 21 weist statistisch verteilte Locher auf, wobei die gesamte Lochflache beispielsweise eine oder mehrere Potenzen kleiner ist als die vollständige Testflache. Im Normalfall wird die gelochte Flache ein Zehntel der eigentlichen Messflache ausmachen. Diese genormte Lochfolie 21, die eine dampfundurchlassige Folie ist, kann einseitig klebbeschichtet sein, so dass man diese entweder auf dem Trager 22 anbringen kann oder aber auch direkt auf der zu messenden Folie oder Membran. Die Anbringung dieser gelochten wasserdampfundurchlässigen Folie ist erforderlich, um mit der vorhandenen hochsensiblen Apparatur arbeiten zu können, trotz der ausserordentlich grossen Mengen von Wasserdampf, welche durch atmungsaktive Folien durchgelassen werden. Durch diese Massnahme lässt sich das Wasserdampfvolumen praktisch um den Faktor 10 herabsetzen.

Die enorme Wasserdampfdurchlassigkeit macht es sinnvollerweise erforderlich, ein kommunizierendes Wassergefäss 12 vorzusehen, welches über eine Wasserzufuhr 11 mit dem Innenraum 4 beziehungsweise dem Schwamm 24 in kommunizierender Verbindung steht. Das entsprechende Gefass 12 ist zwar verschlossen, weist jedoch eine das Nachströmen des Wassers erleichternde Luftleckage 13 auf.

Die Erfindung beruht nicht zuletzt auf der Erkenntnis, dass atmungsaktive Folien dank Randeffekten eine wasserdampftransportierende Wirkung aufweisen, wobei an der Folienoberflache dank des vorbeistromenden Transportgases turbulente Luftstromungen auftreten, welche praktisch eine Sogwirkung verursachen. Folglich kann durch die Anwendung einer atmungsaktiven Deckfolie 23 auf dem Schwamm 24 eine wasserdampfgesattigte Atmosphare bis praktisch direkt an die zu prüfende Folie oder Membran herangefuhrt werden. Damit werden immer exakt wiederholbare Ergebnisse erzielbar. Ein Einfluss durch einen entsprechenden Luftspalt kann damit unberücksichtigt bleiben.

Ein letzter Vorteil dieser Anwendungsform ist zudem darin zu sehen, dass kein freies Wasser mehr im unteren Messkammerteil 2 vorhanden ist. Damit ist zum einen ein Ueberschwappen beim Verschieben der Messkammer ausgeschlossen, womit auch keine Wassertropfen an die zu messende Membran gelangen. Zwar ist es einerseits von Vorteil, die wasserdampfgesättigte Atmosphäre bis direkt an die Membran, die zu messen ist, heranzuführen, doch muss vermieden werden, dass Wasser im flussigen Zustand auf die Membran gelangt, weil die Membran gegenüber Wasser selber absolut sperrend wirkt. Kommt somit Wasser im flüssigen Zustand an eine atmungsaktive Membran oder Folie, so wirkt dies praktisch verschliessend und das Messresultat wird unbrauchbar.

Ein grosser Vorteil des erfindungsgemässen Verfahrens beziehungsweise der erfindungsgemassen Vorrichtung besteht darin, dass praktisch die gesamte bisherige Apparatur weiterhin verwendet werden kann. Eine Umrustung, um somit auch atmungsaktive Folien oder Membranen messen zu konnen, ist daher mit geringem apparativem und finanziellem Aufwand möglich. Praktisch gelingt dies mit Hilfsmitteln als Zusatze zur bereits vorhandenen Vorrichtung, die einen kaum bedeutenden Kostenaufwand darstellen.

## Patentansprüche

1. Verfahren zur Messung der Wasserdampfdurchlassigkeit durch eine Folie oder Membran (20), wobei diese in einer Messkammer (1) gehalten ist und die Trennflache zwischen einem Messkammerunterteil (2) und einem Messkammeroberteil (3) darstellt, wobei im Messkammerunterteil (2) Wasser vorhanden ist und im Messkammeroberteil ein trockenes Tragergas durchstromt zum Abtransport des durchgetretenen Wasserdampfes, dadurch gekennzeichnet, dass mit kapillar wirkenden Mitteln (23,24) der Wasserdampfsättigungsbereich oder eine definierte Feuchte bis direkt an die zu messende Folie oder Membran (20) oder einen Träger (22), auf dem die zu messende Folie oder Membran (20) mittel- oder unmittelbar aufliegt, herantransportiert wird.

2. Verfahren nach Anspruch 1, dadurch gekennzeichnet, dass man zwischen der zu messenden Folie oder Membran (20) und dem Trager (22) eine vollständig wasserdampfundurchlässige Folie (21) anbringt, die eine statistische Verteilung von Lochern aufweist und die Durchgangsfläche um eine oder um eine Mehrzahl von Zehnerpotenzen reduziert.

3. Vorrichtung zur Messung der Wasserdampfdurchlassigkeit von Folien oder Membranen, bestehend aus einer zweiteiligen Messkammer (1), wobei im Messkammerunterteil (2) flüssiges und dampfförmiges Wasser vorhanden ist, und dass die Messkammer einen Messkammeroberteil (3) mit Trägergaseintrittsoffnung (8) und Trägergasaustrittsöffnung (9) aufweist, wobei Mittel zur Trägergasspeisung, - fuhrung und -messung und -auswertung vorhanden sind, und dass die zu messende Membran oder Folie (20) in der Messkammer (1) direkt oder auf einem Träger (22) so gehalten ist, dass sie die Wasserdampftrennfläche zwischen Messkammerunterteil (2) und Messkammeroberteil (3) bildet, dadurch gekennzeichnet, dass im Messkammerunterteil (2) ein Schwamm (24) angeordnet ist, der von einer atmungsaktiven Deckfolie (23) zur zu messenden Folie oder Membran (20) hin überdeckt ist, wobei der Schwamm so gestaltet ist, dass er die atmungsaktive Deckfolie (23) an den Träger (22) oder die zu messende Folie oder Membran (20) druckt.

4. Vorrichtung nach Anspruch 3, dadurch gekennzeichnet, dass zwischen der zu messenden Folie oder Membran eine dampfundurchlässige Folie (21) mit statistisch gleichmassig verteilten Durchgangslöchern zur Verringerung der zu messenden Durchgangsfläche einlegbar ist.

5. Vorrichtung nach Anspruch 4, dadurch gekennzeichnet, dass die dampfundurchlässige Folie (21) eine einseitig klebebeschichtete Folie ist, die auf den Trager (22) aufbringbar ist.

6. Vorrichtung nach Anspruch 3, dadurch gekennzeichnet, dass der im Messkammerunterteil (2) angeordnete Schwamm (24) ein offenporiger Kunststoffschwamm ist, der insgesamt geringfügig grösser ist als der freie Hohlraum (4) des Messkammerunterteiles (2).

7. Vorrichtung nach Anspruch 5, dadurch gekennzeichnet, dass der Schwamm (24) mit einer ubergestülpten atmungsaktiven Deckfolie (23) überdeckt ist, wobei sie mittels einem gummielastischen O-Ring (25) lagestabil auf dem Schwamm (24) gehalten ist und der O-Ring (25) gleichzeitig an der Messkammerwand im Unterteil (2) anliegt.

8. Vorrichtung nach Anspruch 3, dadurch gekennzeichnet, dass der Messkammerunterteil (2) mit einem kommunizierenden Wassergefäss (12) in Verbindung (11) steht.
